# EUROPEAN PATENT SPECIFICATION

(11) **EP 3 581 368 B1**
(45) Date of publication and mention of the grant of the patent: **27.03.2024**
(21) Application number: 19178435.4
(22) Date of filing: 05.06.2019
(51) Int. Cl.: B29C 65/08

(54) **A METHOD FOR SEALING TOGETHER A FIRST SECTION AND A SECOND SECTION OF A PIECE OF PACKAGING MATERIAL, AN ANVIL ASSEMBLY AND A SYSTEM COMPRISING SUCH ASSEMBLY**
VERFAHREN ZUM VERSCHLIESSEN EINES ERSTEN ABSCHNITTS UND EINES ZWEITEN ABSCHNITTS EINES VERPACKUNGSMATERIALS, AMBOSSANORDNUNG UND SYSTEM MIT SOLCH EINER ANORDNUNG
PROCÉDÉ POUR SOUDER ENSEMBLE UNE PREMIÈRE SECTION ET UNE SECONDE SECTION D'UN MATÉRIAU D'EMBALLAGE, ENSEMBLE ENCLUME ET SYSTÈME COMPRENANT UN TEL ENSEMBLE

(30) Priority: 12.06.2018 EP 18177293
(43) Date of publication of application: 18.12.2019
(73) Proprietor: Tetra Laval Holdings & Finance S.A., 1009 Pully (CH)
(72) Inventor: ALEXANDERSSON, Martin, 244 65 Furulund (SE)
(74) Representative: Tetra Pak - Patent Attorneys SE

(56) References cited:
- DE-A1- 3 236 164
- FR-A2- 2 136 875
- JP-A- H09 278 022
- JP-A- S52 125 540
- JP-A- 2004 330 622

## Description

### Technical Field

The invention relates to packaging technology. More particularly, it relates to ultra-sonic sealing technology, such as a method for sealing together a first section and a second section of a piece of packaging material, an anvil assembly and a system comprising such anvil assembly.

### Background Art

Within the field of packaging technology there is a number of different technologies available for sealing packaging material such that packages can be formed from packaging material. A well-known technology used for sealing together packages is so-called ultra-sonic sealing. The general principle of this technology is that a sonotrode, also referred to as ultra-sonic horn, is producing ultra-sonic waves, which results in that part of the packaging material melts. At the same time as heat is generated, two sections of the packaging material are pressed towards one another such that these attach to each other.

Ultra-sonic sealing is commonly used within the packaging industry. Within the liquid food packaging industry, the technology is commonly used for producing packages for holding chilled products, that is, products to be held refrigerated and not in room temperature, such as pasteurized milk. One reason for that the ultra-sonic sealing technology is commonly used for packages for chilled products is that these packages, due to that they are placed in a refrigerator, do not need an Aluminum layer. An effect of not having an Aluminum layer is that technologies, such as induction heat sealing, which is requiring a conductive layer in the packaging material, cannot be used. Another effect of not having the Aluminum layer is that the environmental impact of the packages can be reduced.

An anvil is used to provide for that the packaging material is positioned in relation to the sonotrode such that proper sealing can be achieved. As is disclosed in patent document DE20216532, the anvil may comprise a number of sections that are connected to compression springs. Also patent document JP9278022 discloses that compression springs may form part of the anvil.

A further patent document JP S52 125540 A discloses a continuous ultrasonic sealing device for sealing plastic film or cloth. The ultrasonic vibrations are applied to move the film and welding continuously. Also patent document FR 2 136 875 A2 discloses a continuous ultrasonic sealing device for closing bags by thermal sealing after they have been filled. The sealing device is operated by controlling, the three determining factors: temperature, pressure and time. Temperature being regulated by the amplitude intensity of the ultrasound. Pressure being regulated by the air gap and time being regulated by the speed of travel.

Further prior art is described in patent documents DE3236164A1. Patent document JP 2004 330622 A discloses a continuous ultrasonic sealing method with a drum supporting anvils mounted on springs.

Even though the prior art discloses ways to design the anvil such that an ultra-sonic sealing system may be adapted to for instance different packaging material thicknesses, there is still a need to further improve the ultra-sonic sealing system such that ultra-sonic sealings can be achieved in a more reliable, cost efficient and time efficient manner.

### Summary

It is an object of the invention to at least partly overcome one or more of the above identified limitations of the prior art. In particular, it is an object to provide an improved method and system for ultra-sonic sealing from a cost as well as a quality perspective.

According to a first aspect it is provided a method according to claim 1.

An advantage of having the anvil elements provided with the anvil heads is that the pressure P exerted onto the piece is provided by using a plurality of elements. By doing so, a risk that part of the piece is not provided with the pressure P, and as an effect that an insufficient sealing is provided, can be lowered. This especially holds true if the piece comprises a three-layer section, e.g. a longitudinal sealing, and two-layer sections. The piece of packaging material is continuously fed through the heating station. A continuous ultra-sonic seal is provided.

Having the plurality of elements also increases a possibility to fine tune the first group of anvil elements such that the pressure P exerted onto the piece is adapted such that sufficient sealing can be achieved.

In addition, having the plurality of elements improves a redundancy of the heating station. For instance, even though one of the plurality of elements fails to exert pressure onto the piece a remainder of the elements may provide sufficient pressure for achieving sufficient sealing.

The spring element may be a leaf spring.

Using leaf springs has the advantage that such springs are not provided with sections that are difficult to keep clean. Therefore, from a food safety perspective, using leaf springs is an advantage.

The anvil head and the spring element may form an integral part.

Further, the surface comprises a curved inlet area and a flat area.

An advantage of having the anvil head designed such that the piece, as it moves in a direction D through the heating station, first meets the curved inlet area and thereafter the flat area is that a risk of breaking or scratching the packaging material can be reduced.

The surface comprises a mid-section protrusion.

Since the piece slides over the anvil heads when being fed through the heating station, having the surface provided with the mid-section protrusion comes with an advantage in that friction can be lowered. In addition, having the mid-section protrusion provides for that the pressure is directed to a part of the piece, which may be advantageous in order to achieve sufficient sealing.

Further, the first group of anvil elements may be held in an anvil assembly, wherein the anvil assembly is provided with openings giving access to the first group of anvil elements, and the method may further comprise
cleaning the first group of anvil elements by flushing liquid via the openings.

An advantage with having the openings is that cleaning may be facilitated.

The anvil assembly may comprise a first and a second protrusion, and at least part of the anvil heads may be provided with a first and a second ridge section interacting with the first and second protrusion, respectively.

An advantage with this is that the anvil elements can be restricted to move pass the first and second protrusion, which as an effect provides for that anvil elements may be pre-loaded.

The anvil assembly may further comprise an anvil base element to which the first group of anvil elements is attached, a first and a second part holding the anvil base element, at least one pressure adjustment element arranged in the first part such that the anvil base element can be moved towards and away from the first and second top protrusion.

According to a second aspect it is provided an anvil assembly according to claim 7.

In addition to the advantages set forth above with respect to the first aspect, an advantage with the anvil assembly is that by having the first group of anvil elements in the anvil assembly provides for that mounting and de-mounting is facilitated, which in turn may provide for that service interruptions may be shortened.

The anvil assembly may be provided with openings giving access to the anvil elements such that cleaning is facilitated.

The anvil assembly may comprise a first and a second protrusion, and at least part of the anvil heads are provided with a first and a second ridge section interacting with the first and second protrusion, respectively.

The anvil assembly may further comprise an anvil base element to which the first group of anvil elements is attached, a first and a second part holding the anvil base element, at least one pressure adjustment element arranged in the first part such that the anvil base element can be moved towards and away from the first and second top protrusion.

The spring element may be a leaf spring.

The surface comprises a mid-section protrusion.

According to a third aspect it is provided a system for sealing together a first section and a second section of a piece of packaging material, said system comprising
at least one heating station comprising at least one ultra-sonic horn placed on a first side of the piece and an anvil assembly according to the second aspect placed on a second side of the piece, wherein the first side is opposite to the second side, and
at least one cooling station for cooling down the piece of packaging material such that the at least one plastic layer is solidified.

Even though not explicitly stated for each of the aspects, it is to be understood that the advantages presented with respect to one of the aspects also hold true for the other aspects.

### Brief Description of the Drawings

Embodiments will now be described, by way of example, with reference to the accompanying schematic drawings, in which
Fig. 1a generally illustrates a perspective view of a package.
Fig. 1b generally illustrates a piece of packaging material before being folded into the package illustrated in fig. 1a.
Fig. 2 illustrates a cross-sectional view of the packaging material.
Fig. 3 illustrates a system for sealing together a first and a second section of a piece of packaging material.
Fig. 4 illustrates an anvil assembly.
Fig. 5a and 5b illustrate an anvil head in further detail.
Fig. 6 is a flowchart illustrates a method for sealing together a first and a second section of a piece of packaging material.

### Detailed description

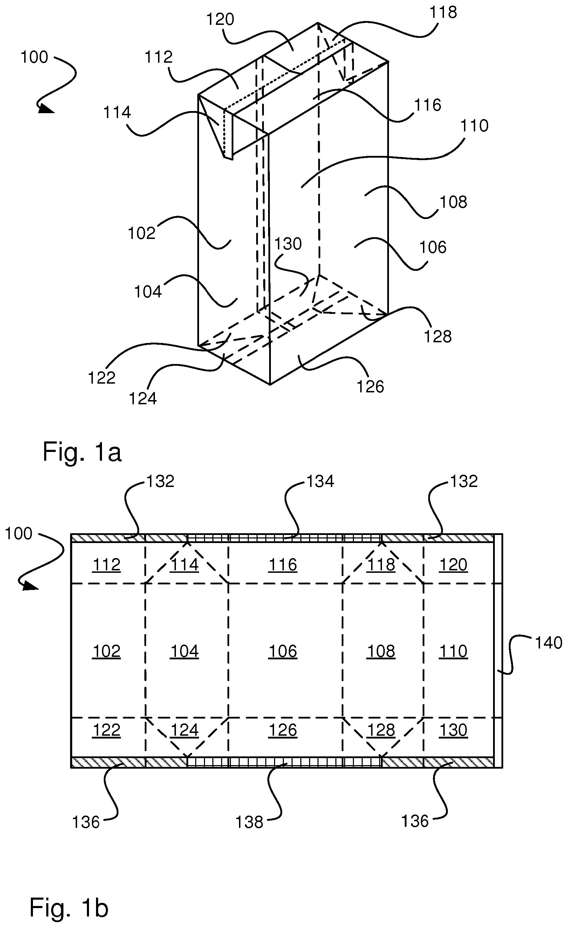

Fig. 1a generally illustrates an example of a carton package 100 made from a piece of package material illustrated in fig. 1b. The carton package 100 comprises a number of panels divided from each other by weakening lines. The weakening lines provide for that the piece of packaging material can be reliably and efficiently folded into the package 100 by a packaging machine, also known as a filling machine.

In this example, the package 100 comprises a first rear panel 102, a left panel 104, a front panel 106, a right panel 108 and a second rear panel 110, which together form a sleeve-shaped main body of the package 100. The first and second rear panel 102, 110 are attached to each other by a so-called longitudinal sealing. In order to avoid that product held in the package comes into contact with interior layers of the packaging material a peripheral part of the second rear panel 110, that is placed inside a peripheral part of the first rear panel 102, can be protected by a plastic strip, sometimes referred to as a longitudinal sealing strip.

Further, the package 100 comprises a first top rear panel 112, a left corner top panel 114, a top front panel 116, a right corner panel 118 and a second top rear panel 120, which together form a top of the package 100. In a similar manner as the first and second rear panel 102, 110, the first and second rear top panels 112, 120 are attached to each other. In order to close the package 100, the first and second rear top panels 112, 120 are attached to the top front panel 116, two sections of the left corner top panel 114 are attached to each other, and two sections of the right corner top panel 118 are attached to each other. This is provided by a transversal sealing made in the packaging machine after the package is filled with the product.

The package 100 also comprises a first bottom rear panel 122, a left corner bottom panel 124, a bottom front panel 126, a right corner bottom panel 128 and a second bottom rear panel 130, which together form a bottom of the package. In a similar manner as the first and second rear panel 102, 110, the first and second bottom rear panels 122, 130 are attached to each other. In order to close the package 100 and thereby form the bottom, the first and second bottom rear panels 122, 130 are attached to the bottom front panel 126, two sections of the left corner bottom panel 124 are attached to each other, and two sections of the right corner bottom panel 128 are attached to each other.

In case the package 100 is produced in a roll-fed packaging machine, a number of pieces of packaging material is provided after one another on a reel of packaging material. By having the pieces of packaging material arranged in this way a transversal sealing forming the bottom can be made at the same time as a transversal sealing forming the top of a subsequent package is made. After having made the transversal sealings, the packages are separated from each other by cutting them apart in a section between the transversal sealings.

To form the transversal sealing, a first top sealing section 134 and a second top sealing section 132 as well as a first bottom sealing section 136 and a second top sealing section 138 can be provided. After having made the transversal sealing, the packaging material can be separated such that the first top sealing section 132 and the second top sealing section 134 form an upper part of the top of the package 100, and in the first bottom sealing section 136 and the second bottom sealing section 138 form a lower part of the bottom of the package 100. To form the longitudinal sealing, a longitudinal sealing section 140 can be used.

In case the package is produced in a blanks-fed packaging machine, the longitudinal sealing is provided beforehand, that is, the first rear panel 102 is attached to the second rear panel 110 via the longitudinal section 140, such that a sleeve-shaped piece of packaging material is provided. In addition, the separation, also referred to as cutting, is not made in the blanks-fed packaging machine, but is made when producing blanks to be fed into the blanks-fed packaging machine.

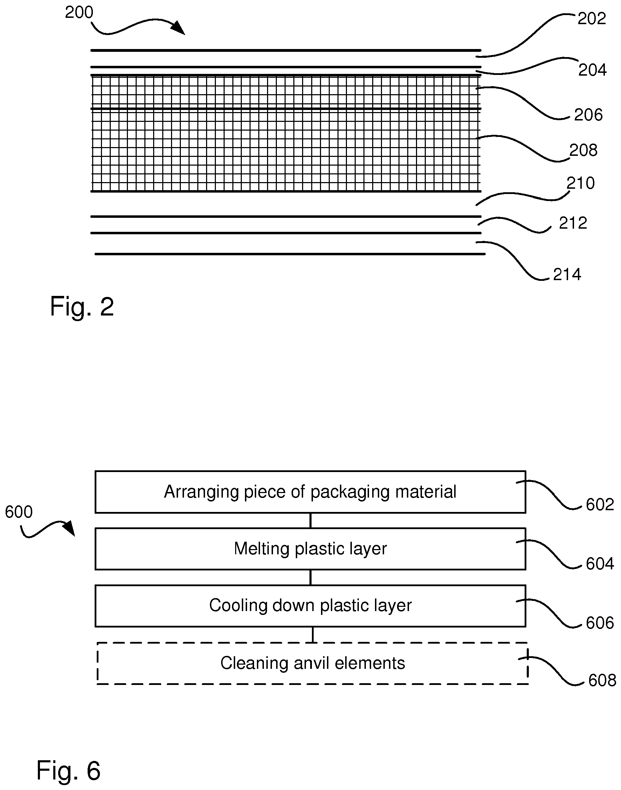

Fig. 2 generally illustrates by way of example a packaging material 200 that can be used for forming the package 100.

Facing the surrounding space, an outer coating 202 may be provided. The outer coating 202 may serve the purpose of avoiding that moisture of water is coming into contact with a printing layer 204 placed inside the outer coating 202. The printing layer 204 can comprise ink or any other material used for providing a print on the package 100.

Inside the printing layer 204, a first and a second paperboard layer 206, 208 can be provided. The first and second paperboard layers 206, 208 provide robustness to the package 100. The first paperboard layer 206 may be bleached paperboard with or without claycoat. The second paperboard layer 208 may be bleached or unbleached paperboard.

Next a lamination layer 210 made of plastic material can be provided. The lamination layer 210 can provide for that microorganisms are hindered from coming into contact with the product held inside the package 100.

Inside the lamination layer 210, an Aluminum foil 212 can be provided. The Aluminum foil 212 can provide for that light, oxygen and odors are hindered from coming into contact with the product held inside the package 100, but also that flavors inside the package can be released from the package 100. The Aluminum foil 212 does however not exist in all types of packaging material. For instance, in the packaging material used for packages for chilled products, i.e. products that will be refrigerated, the Aluminum foil 212 is most often left out and replaced by a combination of lamination layers and paperboard layers.

Closest to the product held inside the package 100, a first and a second internal coating 214, 216, made of e.g. plastics material, can be provided. One purpose with these are that the product is hindered from coming in direct contact with the Aluminum foil 212.

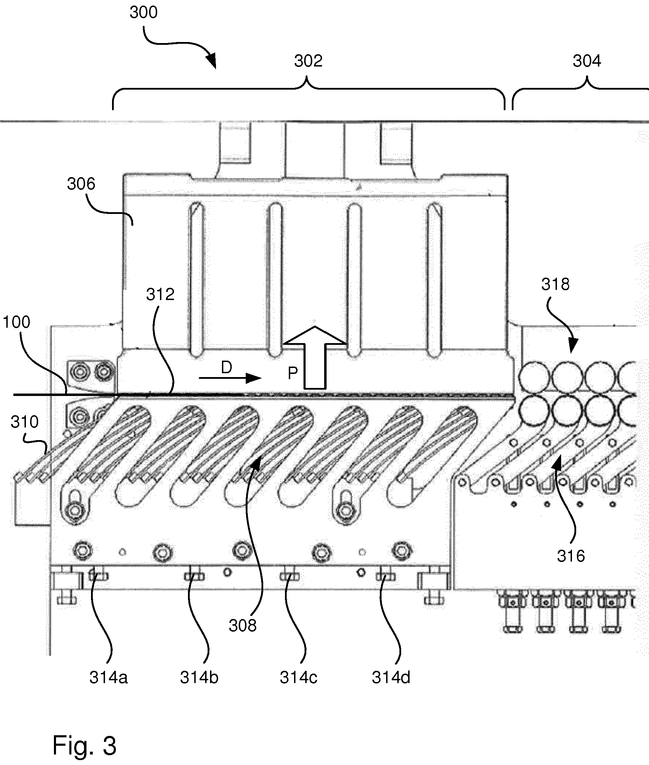

Fig. 3 illustrates a system 300 for sealing together the first section 132, 136 and the second section 134, 138 of the piece 100 by way of example, seen from above. The system 300 can comprise a heating station 302, in which heat is generated such that at least one of the plastic layers 210, 214, 216 is melted, and a cooling station 304, in which the plastic layers are cooled down such that the plastic layers are solidified.

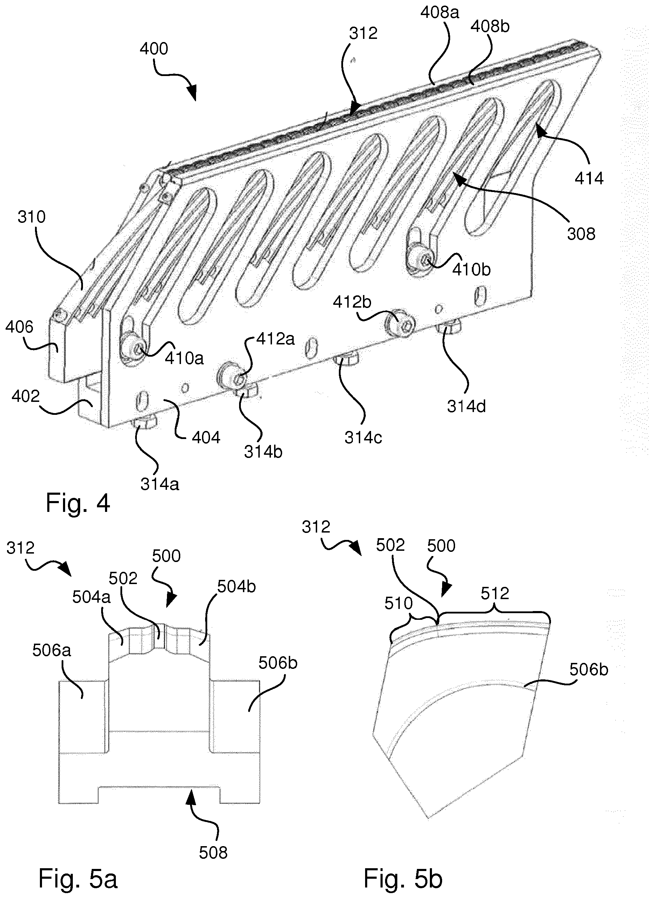

The heating station 306 can comprise an ultra-sonic horn 306, also referred to as sonotrode, placed on a first side of the piece 100. On the other side, a second side, a first group 308 of anvil elements is provided. The anvil elements provide for that the piece 100 is held against the ultra-sonic horn 306 by applying a pressure P onto the piece 100. To provide the pressure P, each of the anvil elements may comprise a spring element 310, which may be a leaf spring or a torsion spring, and an anvil head 312. The spring element 310 and the anvil head 312 may be formed in one integral part, but if e.g. different materials are to be used in the two, they may also be two separate elements fastened together. At least one pressure adjustment elements 314a, 314b, 314c, 314d may be used for adjust the pressure P, as is further illustrated in fig. 4. The piece (100) of packaging material is continuously fed through the heating station during the sealing.

The cooling station 314 can comprise a second group 316 of anvil elements and cooling wheels 318. The second group 308 of anvil elements differs from the first group 308 in that wheels are used for interacting with the piece 100 instead of anvil heads 312 as in the first group. Even though illustrated as different types, also the second group 316 of anvil elements may be of the same type as the first group 308.

Both the first group 308 and the second group 316 is fixedly mounted, which means that instead of moving the anvil elements the piece 100 of packaging material 200 is moved in a direction D.

The first group 308 of anvil elements 308 may be held in an anvil assembly 400 as illustrated in fig. 4 by way of example. The anvil assembly 400 can comprise a first part 402 and a second part 404 that are attached to each other such that a space is formed between the two. In this space an anvil base element 406 may be placed. The anvil base element 406 is attached to the first group 308 of anvil elements, for instance by that the spring elements 310 are attached to the anvil base element 406.

To provide for that the anvil heads 312 are kept within the space formed between the first and second element 402, 404, a first and a second top protrusion 408a, 408b may be provided on the first and second part 402, 404, respectively. These protrusions can be made to interact with a first and a second ridge section 506a, 506b provided on the anvil heads 312, as is further illustrated in detail in fig. 5a. Due to that anvil heads 312 are hindered from moving pass the first and second protrusion 408a, 408b, a load of the spring elements 310 may be adjusted by using the pressure adjustment elements 314a, 314b, 314c, 314d. These elements can be threaded elements that interact with threaded holes provided in the first part 402. Since the anvil base element 406 may be free to move in relation to the first and second part 402, 404 this can be moved towards the first and second protrusion 408a, 408b by screwing in the pressure adjustment elements 314a, 314b, 314c, 314d into the screw holes. An effect of this is that a load of the spring elements 310 is increased, which in turn provides for that a higher pressure will be applied onto the piece 100. In a similar manner, the pressure adjustment elements 314a, 314b, 314c, 314d may be loosened such the load decreases. The anvil base element 406 may be fixed to the first and second part 402, 404 by using fixation bolts 41 0a, 410b. Further, in case e.g. the spring elements 310 are to be replaced, the first and second part 402, 404 may be released from each other by unscrewing attachment bolts 412a, 412b.

To provide for that the anvil elements can be reached easily openings 414 in the first and second part 402, 404 can be provided. In addition to provide for that ocular inspection of the anvil elements can easily be made, the openings 414 provide for that a more food safe solution can be provided. With the openings 414 cleaning is namely facilitated since liquid, such as water, may be flushed through the openings. Using leaf springs in combination with the openings 414 is a good combination from a food safety and cleaning perspective. The leaf springs are namely easier to keep clean than for instance compression springs.

Fig. 5a and 5b illustrates an anvil head 312 in further detail. Fig. 5a is a front view and fig. 5b is a side view. As described above, the anvil head 312 is arranged to lie against the piece 100 as this is continuously fed through the heating station 302 such that the at least one plastic layers 210, 214, 216 is melted and the sealing can be achieved. To provide for that the piece 100 can slide on the anvil head 312, a surface 500 with a mid-section protrusion 502 can be provided. By having such profiled surface a contact area between the piece 100 and the anvil head 312 is made smaller, which implies less friction. In addition, the surface 500 may be provided with a first and a second chamfered section 504a, 504b on each side of the mid-section protrusion 502. As described above, the first and the second ridge section 506a, 506b can be provided for interacting with the first and second protrusion 408a, 408b of the anvil assembly 400. Further, a groove 508 may be provided for receiving the spring element 310. To reduce a risk that the piece 100 is not transferred smoothly from one anvil head to another, the anvil head 312 may be provided with a curved inlet area 510 and a flat area 512. When being mounted, the anvil head 312 is placed such that the piece 100 first meets the curved inlet area 510 and thereafter the flat area 512 when being fed in the direction D.

Fig. 6 is a flow chart illustrating the general steps of a method 600 for sealing together the first section 132, 136 and the second section 134, 138 of the piece 100 of packaging material 200.

In a first step 602, the piece 100 is arranged such that the first section 132, 136 and the second section 134, 138 lie against each other.

In a second step 604, the piece 100 can be fed through the heating station 302 such that at least one plastic layer 210, 214, 216 is melted.

In a third step 606, the piece is cooled down such that the at least one plastic layer 210, 214, 216 is solidified.

Optionally, in a fourth step 608, the anvil elements may be cleaned. This may be done by flushing liquid through the openings 414 in the anvil assembly 400.

From the description above follows that, although various embodiments of the invention have been described and shown, the invention is not restricted thereto, but may also be embodied in other ways within the scope of the subject-matter defined in the following claims.

## Claims

1. A method (600) for sealing together a first section (132, 136) and a second section (134, 138) of a piece (100) of packaging material (200), said method comprising
arranging (602) the piece (100) of packaging material such that the first (132,136) and second section (134,138) lie against each other,
melting (604) at least one plastic layer (210, 214, 216) in the first (132, 136) and second section (134, 138) by feeding the piece (100) of packaging material through a heating station (302),
wherein the heating station (302) comprises at least one ultra-sonic horn (306) placed on a first side of the piece (100) and a first group (308) of anvil elements placed on a second side of the piece (100), wherein the first side is opposite to the second side,
wherein each of the anvil elements (308) comprises an anvil head (312) connected to a spring element (310), wherein a surface (500) of the anvil head (132) is configured for being held against the piece (100) as this is fed through the heating station (302) such that a pressure (P) is exerted onto the piece (100),
cooling (606) down the piece (100) of packaging material such that the at least one plastic layer (210, 214, 216) is solidified, and
wherein the surface (500) comprises a mid-section protrusion (502),
**characterized in that**
the surface (500) comprises a curved inlet area (510) and a flat area (512).

2. The method according to claim 1, wherein the spring element (310) is a leaf spring.

3. The method according to any one of the preceding claims, wherein the anvil head (312) and the spring element (310) forms an integral part.

4. The method according to any one of the preceding claims, wherein the first group (308) of anvil elements is held in an anvil assembly (400), wherein the anvil assembly is provided with openings (414) giving access to the first group (308) of anvil elements, said method further comprising
cleaning (608) the first group (308) of anvil elements by flushing liquid via the openings (414).

5. The method according to claim 4, wherein the anvil assembly (400) comprises a first and a second protrusion (408a, 408b), and at least part of the anvil heads (312) are provided with a first and a second ridge section (506a, 506b) interacting with the first and second protrusion (408a, 408b), respectively.

6. The method according to claim 5, wherein the anvil assembly (400) further comprises an anvil base element (406) to which the first group (308) of anvil elements is attached, a first and a second part (402, 404) holding the anvil base element (406), at least one pressure adjustment element (314a, 314b, 314c, 314d) arranged in the first part (402) such that the anvil base element (406) can be moved towards and away from the first and second top protrusion (408a, 408b).

7. An anvil assembly (400) comprising
a first group (308) of anvil elements, wherein each of the anvil elements comprises an anvil head (312) connected to a spring element (310), wherein a surface (500) of the anvil head (312) is configured for being held against a piece (100) of packaging material (200) for allowing a pressure (P) to be exerted onto the piece (100), and wherein the surface (500) comprises a mid-section protrusion (502),
**characterized in that**
the surface (500) comprises a curved inlet area (510) and a flat area (512).

8. The anvil assembly (400) according to claim 7, wherein the anvil assembly (400) is provided with openings (414) giving access to the anvil elements such that cleaning is facilitated.

9. The anvil assembly (400) according to claim 7 or 8, wherein the anvil assembly (400) comprises a first and a second protrusion (408a, 408b), and at least part of the anvil heads (312) are provided with a first and a second ridge section (506a, 506b) interacting with the first and second protrusion (408a, 408b), respectively.

10. The anvil assembly (400) according to claim 9, further comprising an anvil base element (406) to which the first group (308) of anvil elements is attached, a first and a second part (402, 404) holding the anvil base element (406), at least one pressure adjustment element (314a, 314b, 314c, 314d) arranged in the first part (402) such that the anvil base element (406) can be moved towards and away from the first and second top protrusion (408a, 408b).

11. The anvil assembly (400) according to any one of the claims 7 to 10, wherein the spring element (310) is a leaf spring.

12. A system for sealing together a first section (132, 136) and a second section (134, 138) of a piece (100) of packaging material (200), said system comprising
at least one heating station (302) comprising at least one ultra-sonic horn (306) placed on a first side of the piece (100),
and an anvil assembly (400) according to any one of the claims 7 to 11 placed on a second side of the piece (100), wherein
the first side is opposite to the second side, and
at least one cooling station (304) for cooling (606) down the piece (100) of packaging material such that the at least one plastic layer (210, 214, 216) is solidified.

## Patentansprüche

1. Verfahren (600) zum miteinander Verschweißen eines ersten Abschnitts (132, 136) und eines zweiten Abschnitts (134, 138) eines Stücks (100) Verpackungsmaterial (200), wobei das Verfahren Folgendes umfasst:
Anordnen (602) des Stücks (100) Verpackungsmaterial, sodass der erste (132, 136) und zweite Abschnitt (134, 138) aneinander anliegen,
Schmelzen (604) mindestens einer Kunststoffschicht (210, 214, 216) im ersten (132, 136) und zweiten Abschnitt (134, 138) durch Speisen des Stücks (100) Verpackungsmaterial durch eine Heizstation (302),
wobei die Heizstation (302) mindestens eine Sonotrode (306), die auf einer ersten Seite des Stücks (100) platziert ist, und eine erste Gruppe (308) Ambosselemente, die auf einer zweiten Seite des Stücks (100) platziert sind, umfasst, wobei die erste Seite der zweiten Seite entgegengesetzt ist,
wobei jedes der Ambosselemente (308) einen Ambosskopf (312) umfasst, der mit einem Federelement (310) verbunden ist, wobei eine Fläche (500) des Ambosskopfes (132) dazu ausgelegt ist, gegen das Stück (100) gehalten zu werden, während es durch die Heizstation (302) gespeist wird, sodass ein Druck (P) auf das Stück (100) aufgebracht wird,
Abkühlen (606) des Stücks (100) Verpackungsmaterial, sodass die mindestens eine Kunststoffschicht (210, 214 216) erstarrt, und
wobei die Fläche (500) einen Mittelabschnittsvorsprung (502) umfasst,
**dadurch gekennzeichnet, dass**
die Fläche (500) einen gekrümmten Einlassbereich (510) und einen planen Bereich (512) umfasst.

2. Verfahren nach Anspruch 1, wobei das Federelement (310) eine Blattfeder ist.

3. Verfahren nach einem der vorstehenden Ansprüche, wobei der Ambosskopf (312) und das Federelement (310) einen integralen Teil ausbilden.

4. Verfahren nach einem der vorstehenden Ansprüche, wobei die erste Gruppe (308) Ambosselemente in einer Ambossanordnung (400) gehalten wird, wobei die Ambossanordnung mit Öffnungen (414) versehen ist, die Zugang zur ersten Gruppe (308) Ambosselemente geben, wobei das Verfahren ferner umfasst:
Reinigen (608) der ersten Gruppe (308) Ambosselemente durch Spülen einer Flüssigkeit durch die Öffnungen (414).

5. Verfahren nach Anspruch 4, wobei die Ambossanordnung (400) einen ersten und einen zweiten Vorsprung (408a, 408b) umfasst und mindestens ein Teil der Ambossköpfe (312) mit einem ersten und einem zweiten Rippenabschnitt (506a, 506b) versehen ist, die mit dem ersten bzw. zweiten Vorsprung (408a, 408b) zusammenwirken.

6. Verfahren nach Anspruch 5, wobei die Ambossanordnung (400) ferner ein Ambossbasiselement (406) umfasst, an dem die erste Gruppe (308) Ambosselemente befestigt ist, wobei ein erster und zweiter Teil (402, 404) das Ambossbasiselement (406) halten, wobei mindestens ein Druckeinstellungselement (314a, 314b, 314c, 314d) im ersten Teil (402) angeordnet ist, sodass das Ambossbasiselement (406) auf den ersten und zweiten oberen Vorsprung (408a, 408b) zu und davon weg bewegt werden kann.

7. Ambossanordnung (400), umfassend:
eine erste Gruppe (308) Ambosselemente, wobei jedes der Ambosselemente einen Ambosskopf (312) umfasst, der mit einem Federelement (310) verbunden ist, wobei eine Fläche (500) des Ambosskopfes (312) dazu ausgelegt ist, gegen ein Stück (100) Verpackungsmaterial (200) gehalten zu werden, um zuzulassen, dass ein Druck (P) auf das Stück (100) aufgebracht wird, und wobei die Fläche (500) einen Mittelabschnittsvorsprung (502) umfasst,
**dadurch gekennzeichnet, dass**
die Fläche (500) einen gekrümmten Einlassbereich (510) und einen planen Bereich (512) umfasst.

8. Ambossanordnung (400) nach Anspruch 7, wobei die Ambossanordnung (400) mit Öffnungen (414) versehen ist, die Zugang zu den Ambosselementen geben, sodass die Reinigung ermöglicht wird.

9. Ambossanordnung (400) nach Anspruch 7 oder 8, wobei die Ambossanordnung (400) einen ersten und einen zweiten Vorsprung (408a, 408b) umfasst und mindestens ein Teil der Ambossköpfe (312) mit einem ersten und einem zweiten Rippenabschnitt (506a, 506b) versehen ist, die mit dem ersten bzw. zweiten Vorsprung (408a, 408b) zusammenwirken.

10. Ambossanordnung (400) nach Anspruch 9, ferner umfassend ein Ambossbasiselement (406), an dem die erste Gruppe (308) Ambosselemente befestigt ist, wobei ein erster und zweiter Teil (402, 404) das Ambossbasiselement (406) halten, wobei mindestens ein Druckeinstellungselement (314a, 314b, 314c, 314d) im ersten Teil (402) angeordnet ist, sodass das Ambossbasiselement (406) auf den ersten und zweiten oberen Vorsprung (408a, 408b) zu und davon weg bewegt werden kann.

11. Ambossanordnung (400) nach einem der Ansprüche 7 bis 10, wobei das Federelement (310) eine Blattfeder ist.

12. System zum miteinander Verschweißen eines ersten Abschnitts (132, 136) und eines zweiten Abschnitts (134, 138) eines Stücks (100) Verpackungsmaterial (200), wobei das System Folgendes umfasst:
mindestens eine Heizstation (302), umfassend mindestens eine Sonotrode (306), die auf einer ersten Seite des Stücks (100) platziert ist,
und eine Ambossanordnung (400) nach einem der Ansprüche 7 bis 11, die auf einer zweiten Seite des Stücks (100) platziert ist, wobei
die erste Seite der zweiten Seite entgegengesetzt ist und
mindestens eine Kühlstation (304) zum Abkühlen (606) des Stücks (100) Verpackungsmaterial, sodass die mindestens eine Kunststoffschicht (210, 214 216) erstarrt.

## Revendications

1. Procédé (600) pour souder ensemble une première section (132, 136) et une seconde section (134, 138) d'une pièce (100) d'un matériau d'emballage (200), ledit procédé comprenant
l'agencement (602) de la pièce (100) de matériau d'emballage de façon que la première section (132, 136) et la seconde section (134, 138) se trouvent l'une contre l'autre,
la fusion (604) d'au moins une couche de plastique (210, 214, 216) dans la première section (132, 136) et la seconde section (134, 138) par l'introduction de la pièce (100) à travers une station de chauffage (302),
dans lequel la station de chauffage (302) comprend au moins un émetteur d'ultrasons (306) placé sur un premier côté de la pièce (100) et un premier groupe (308) d'éléments d'enclume placé sur un deuxième côté de la pièce (100), dans lequel le premier côté est opposé au deuxième côté,
dans lequel chacun des éléments d'enclume (308) comprend une tête d'enclume (312) reliée à un élément à ressort (310), dans lequel une surface (500) de la tête d'enclume (132) est conçue pour être retenue contre la pièce (100) à mesure qu'elle est introduite dans la station de chauffage (302) de sorte qu'une pression (P) est exercée sur la pièce (100),
le refroidissement (606) de la pièce (100) de matériau d'emballage de sorte que l'au moins une couche de plastique (210, 214, 216) est solidifiée, et
dans lequel la surface (500) comprend une saillie à mi-section (502),
**caractérisé en ce que**
la surface (500) comprend une zone d'entrée courbe (510) et une zone plate (512).

2. Procédé selon la revendication 1, dans lequel l'élément à ressort (310) est un ressort à lame.

3. Procédé selon l'une quelconque des revendications précédentes, dans lequel la tête d'enclume (312) et l'élément à ressort (310) forme une partie intégrée.

4. Procédé selon l'une quelconque des revendications précédentes, dans lequel le premier groupe (308) d'éléments d'enclume est retenu dans un ensemble d'enclume (400), dans lequel l'ensemble d'enclume est muni d'ouvertures (414) donnant accès au premier groupe (308) d'éléments d'enclume, ledit procédé comprenant en outre :
le nettoyage (608) du premier groupe (308) d'éléments d'enclume par l'envoi de liquide par le biais des ouvertures (414).

5. Procédé selon la revendication 4, dans lequel l'ensemble d'enclume (400) comprend une première et une seconde saillie (408a, 408b), et au moins une partie des têtes d'enclume (312) sont munies d'une première et d'une seconde section de crête (506a, 506b) interagissant respectivement avec la première et la seconde saillie (408a, 408b).

6. Procédé selon la revendication 5, dans lequel l'ensemble d'enclume (400) comprend en outre un élément de base d'enclume (406) auquel le premier groupe (308) d'éléments d'enclume est fixé, une première et une seconde partie (402, 404) retenant l'élément de base d'enclume (406), au moins un élément de réglage de pression (314a, 314b, 314c, 314d) disposé dans la première partie (402) de sorte que l'élément de base d'enclume (406) peut être rapproché et éloigné de la première et la seconde saillie supérieure (408a, 408b).

7. Ensemble d'enclume (400) comprenant
un premier groupe (308) d'éléments d'enclume, dans lequel chacun des éléments d'enclume comprend une tête d'enclume (312) reliée à un élément à ressort (310), dans lequel une surface (500) de la tête d'enclume (312) est conçue pour être retenue contre une pièce (100) de matériau d'emballage (200) pour permettre d'exercer une pression (P) sur la pièce (100), et dans lequel la surface (500) comprend une saillie à mi-section (502),
**caractérisé en ce que**
la surface (500) comprend une zone d'entrée courbe (510) et une zone plate (512).

8. Ensemble d'enclume (400) selon la revendication 7, dans lequel l'ensemble d'enclume (400) est muni d'ouvertures (414) donnant accès aux éléments d'enclume de façon à faciliter le nettoyage.

9. Ensemble d'enclume (400) selon la revendication 7 ou 8, dans lequel l'ensemble d'enclume (400) comprend une première et une seconde saillie (408a, 408b), et au moins une partie des têtes d'enclume (312) sont munies d'une première et d'une seconde section de crête (506a, 506b) interagissant respectivement avec la première et la seconde saillie (408a, 408b).

10. Ensemble d'enclume (400) selon la revendication 9, comprenant en outre un élément de base d'enclume (406) auquel le premier groupe (308) d'éléments d'enclume est fixé, une première et une seconde partie (402, 404) retenant l'élément de base d'enclume (406), au moins un élément de réglage de pression (314a, 314b, 314c, 314d) disposé dans la première partie (402) de sorte que l'élément de base d'enclume (406) peut être rapproché et éloigné de la première et la seconde saillie supérieure (408a, 408b).

11. Ensemble d'enclume (400) selon l'une quelconque des revendications 7 à10, dans lequel l'élément à ressort (310) est un ressort à lame.

12. Système de soudage d'une première section (132, 136) et d'une seconde section (134, 1378) d'une pièce (100) de matériau d'emballage (200), ledit système comprenant
au moins une station de chauffage (302) comprenant au moins un émetteur d'ultrasons (306) placé sur un premier côté de la pièce (100),
et un ensemble d'enclume (400) selon l'une quelconque des revendications 7 à 11 placé sur un second côté de la pièce (100), dans lequel
le premier côté est opposé au second côté, et
au moins une station de refroidissement (304) destinée à refroidir (606) la pièce (100) de matériau d'emballage de sorte que l'au moins une couche de plastique (210, 214, 216) est solidifiée.
